# EUROPEAN PATENT SPECIFICATION

(11) **EP 1 347 004 B1**
(45) Date of publication and mention of the grant of the patent: **27.04.2016**
(21) Application number: 01997199.3
(22) Date of filing: 26.11.2001
(51) Int. Cl.: C09D 175/04, C08G 18/40, C08G 18/62, C08G 18/77, C08G 18/79, C08G 18/72

(54) **HIGH-SOLID COATING COMPOSITION**
FESTSTOFFREICHE BESCHICHTUNGSZUSAMMENSETZUNG
COMPOSITION DE REVETEMENT A SOLIDITE ELEVEE

(30) Priority: 27.11.2000 JP 2000359794
(43) Date of publication of application: 24.09.2003
(73) Proprietor: Asahi Kasei Kabushiki Kaisha, Osaka-shi, Osaka 530-8205 (JP)
(72) Inventor: ASAHINA, Yoshiyuki, Nobeoka-shi, Miyazaki 882-0007 (JP); UEYANAGI, Kaoru, Nobeoka-shi, Miyazaki 882-0863 (JP); KATAGAWA, Hironori, Nobeoka-shi, Miyazaki 889-0503 (JP)
(74) Representative: Brookes Batchellor LLP
(86) International application number: PCT/JP2001/010275
(87) International publication number: WO 2002/042351

(56) References cited:
- EP-A- 0 787 752
- WO-A-96/17881
- JP-A- 60 044 561
- JP-A- 2002 003 568
- DATABASE WPI Section Ch, Week 199006 Derwent Publications Ltd., London, GB; Class A25, AN 1990-041654 XP002272761 & JP 01 319524 A (HITACHI CABLE LTD), 25 December 1989 (1989-12-25)

## Description

### TECHNICAL FIELD

The present invention relates to a polyisocyanate composition having low viscosity and superior quick-drying characteristics, and a high solids coating composition using the composition to provide a coating film with superior flexibility and appearance.

### BACKGROUND ART

Polyurethane coating materials are known to have superior flexibility, chemical resistance and staining resistance. Particularly, polyurethane coating materials using a non-yellowing polyisocyanate derived from aliphatic diisocyanates such as hexamethylene diisocyanate (hereinafter called HDI) or alicyclic diisocyanates such as isophorone diisocyanate (hereinafter called IPDI), as a curing agent, are widely used because of their superior weather-ability in addition to the above advantages.

It is also known that lysine triisocyanate (hereinafter called LTI) or its biuret type and bis(2-isocyanatoethyl)-2-isocyanato glutarate (hereinafter called GTI) known as a low viscosity polyisocyanate are also used as a curing agent for polyurethane coating materials (JP-A-53-135931, JP-A-54-110296, JP-A-2000-302745 and JP-A-60-44561).

It is also a known technology to use these curing agents of low viscosity polyisocyanates in combination with general-purpose polyisocyanates derived from diisocyanates such as HDI and IPDI. WO 96/17881 discloses a technology to add LTI to a trimer of an aliphatic or alicyclic.diisocyanate, in order to improve the scratch resistance of a flexible polyurethane resin. However, the invention does not refer to the application of the specific high solids low molecular weight polyol of the present invention to high solids coating materials. WO 96/17881 also does not disclose or suggest the effects of the polyisocyanate [B] component derived from aliphatic or alicyclic diisocyanates having a number average molecular weight not higher than 750 as specified by the present invention, and it only discloses that the use of LTI provides good drying characteristics of coating films due to a low molecular weight and a high concentration of the isocyanate group.

On the other hand, a combined use of 4-isocyanatomethyl-1,8-octamethylene diisocyanate, which is a low viscosity polyisocyanate, and a polyisocyanate derived from diisocyanates such as HDI is known, although the former polyisocyanate has a structure different from those of the present invention having an ester linkage in the molecule (JP-A-57-198761 and JP-A-9-216930). The former invention aims at an improvement of curability and drying characteristics while maintaining the characteristics of the polyisocyanates derived from HDI and the like, and discloses only good drying characteristics of coating films by the use of this low viscosity polyisocyanate, due to a low molecular weight and a high concentration of the isocyanate group. The latter invention aims at lowering viscosity without decreasing any functional value by using a low viscosity polyisocyanate composition and a high viscosity polyisocyanate composition in combination.

In recent years, it has been earnestly studied to increase the solids content of coating materials in response to the requirement to decrease volatile organic compounds (VOC) in order to protect the global environment. High solids coating materials are generally hard to handle compared with conventionally used low solids coating materials (solids content up to about 50% by weight) due to a higher solids content. It is also difficult to attain desirable properties such as flexibility, in particular, surface smoothness of coating films.

A high solids coating composition using LTI is also known. JP-A-11-5943 and JP-A-11-189744 describe high solids coating compositions containing vinyl polymer polyol containing an alkoxysilyl group and LTI aimed at improvements in acid resistance and scratch resistance of coating films, and JP-A-2000-109753 describes high solids coating compositions containing a polyisocyanate derived from two kinds of polyols and diisocyanates to solve problems of pot life and hardness of the coating films.

However, in any of these technologies, coating compositions containing a polyisocyanate composition having a low viscosity and superior quick-drying characteristics while being high solids coating materials and coating films thereof superior in flexibility and surface smoothness could not be obtained.

### DISCLOSURE OF THE INVENTION

An objective of the present invention is to provide a high solids coating material capable of forming a coating film superior in flexibility, such as impact resistance, and surface smoothness.

As the result of an earnest study, the present inventors have found that the above described objective can be attained by using triisocyanate having an isocyanate group at the position adjacent to an ester linkage in combination with a specific polyisocyanate derived from diisocyanates, and thus completed the present invention.

Thus, the present invention provides:
(1) A polyisocyanate mixture comprising (i) polyisocyanate [A] represented by the following general formula (I): 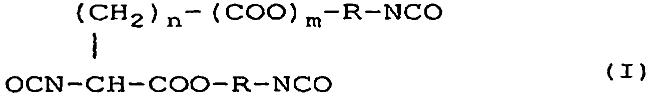 wherein, R is an alkylene group having 2 to 5 carbon atoms, n is 1 or 2 and m is 0 or 1; and
   (ii) polyisocyanate [B] derived from hexamethylene diisocyanate and having at least one of the following concentrations of isocyanate group:
      where the polyisocyanate is a urethane-modified isocyanurate type: not less than 18% by mass;
      where the polyisocyanate is an allophanate type: not less than 10% by mass; and
      where the polyisocyanate is an uretdione type: not less than 15% by mass,
      wherein the polyisocyanate [B] is substantially free from monomeric diisocyanate and has a number of average molecular weight not higher than 650.
(2) A polyisocyanate mixture described in (1),
   wherein the number average molecular weight of polyisocyanate [B] is not higher than 600.
(3) A curing agent for high solids coating materials, consisting of a polyisocyanate mixture described in any one of said (1) to (2).
(4) A high solids coating composition comprising a polyol satisfying all of the following conditions:
   1. Number average molecular weight of the resin: 500 to 5000
   2. Solids content of the resin: 60 to 100% by weight
   3. Hydroxyl value of the resin: 30 to 300 mgKOH/g
   4. Glass transition temperature of the resin: -20 to 100°C
   and a polyisocyanate mixture described in any one of the above (1) to (2).
(5) A coating composition described in the above (4) for use as a top coat to be applied on a base coat layer containing a pigment.
(6) A coating composition described in the above (5), wherein the base coat layer is a coating film obtained from a water-based coating material.
(7) A coating composition described in the above (5) or (6), wherein the base coat layer and the top coat layer are simultaneously cured.

### BRIEF DESCRIPTION OF THE DRAWINGS

Fig. 1 shows a state of occurrence of foaming (crater-like projections or pinholes) on the surface of the coating film in Example 11.
Fig. 2 shows a state of occurrence of foaming (crater-like projections or pinholes) on the surface of the coating film in Comparative Example 7.
Fig. 3 shows a state of occurrence of foaming (crater-like projections or pinholes) on the surface of the coating film in Comparative Example 8.
Fig. 4 shows a state of occurrence of foaming (crater-like projections or pinholes) on the surface of the coating film in Comparative Example 9.

### BEST MODE FOR CARRYING OUT THE INVENTION

Preferable aliphatic and alicyclic diisocyanates (monomers) are those having 4 to 30 carbon atoms and 8 to 30 carbon atoms, respectively. These compounds include the diisocyanates such as tetramethylene-1,4-diisocyanate, pentamethylene-1,5-diisocyanate, hexamethylene diisocyanate, 2,2,4-trimethylhexamethylene-1,6-diisocyanate, lysine diisocyanate, isophorone diisocyanate, 1,3-bis(isocyanatomethyl)-cyclohexane and 4,4'-dicyclohexylmethane diisocyanate. Among others, hexamethylene diisocyanate (HDI) and isophorone diisocyanate (IPDI) are preferable because of good weatherability and easy industrial availability. They may be used alone or in combination thereof. HDI is preferably used as an essential component which provides lower viscosity and gives flexibility to a polyurethane.

Polyisocyanate [B] is obtained from the above described diisocyanate monomers.

Polyisocyanate [B] contains, for example, one or more kinds of biuret linkage, urea linkage, isocyanurate linkage, uretdione linkage, urethane linkage, allophanate linkage, iminooxadiazinedione linkage and oxadiazinetrione linkage.

Polyisocyanates having a biuret linkage can be obtained by reacting a diisocyanate monomer with a biuret forming agent such as water, t-butanol, amine and urea in a molar ratio of biuret forming agent / isocyanate group of the isocyanate monomer of about 1/2 to about 1/100, followed by removing unreacted diisocyanate monomer. Typical examples are described, for example, in JP-A-53-106797, JP-A-55-11452 and JP-A-59-95259.

Polyisocyanates having an isocyanurate linkage can be obtained, for example, by a catalytic isocyanurate reaction. The reaction is stopped when the conversion ratio (mass of formed polyisocyanate / mass of charged diisocyanate monomer) reaches 5 to 80% by mass, preferably 5 to 25% by mass, followed by removing unreacted diisocyanate. The concentration of the unreacted diisocyanate in the thus obtained polyisocyanate becomes not more than 1% by mass, preferably not more than 0.5% by mass. In the operation of removing unreacted diisocyanate mentioned below, the concentration of unreacted diisocyanate in the obtained polyisocyanate is also the same.

The concentration of monoisocyanurate (trimer of HDI) in the thus obtained polyisocyanate is preferably not less than 60% by mass, thereby a number average molecular weight of not higher than 750 can be attained.

In the isocyanurate formation reaction, 1 to 6 valent, preferably 1 to 2 valent, more preferably mono-valent alcohol can be used in combination. Use of the mono-valent alcohol is preferable to obtain a desirable polyisocyanate having a low viscosity, thereby a number average molecular weight of not higher than 600 can be attained.

Polyisocyanate obtained by an isocyanurate formation reaction using an alcohol as an auxiliary raw material other than diisocyanate is called an urethane-modified isocyanurate type polyisocyanate. The urethane-modified isocyanurate type polyisocyanate can be manufactured by reacting diisocyanate with alcohol, prior to or simultaneously with the isocyanurate formation reaction, followed by removing unreacted diisocyanate. The urethane-modified isocyanurate type polyisocyanate thus obtained has either an urethane linkage or an allophanate linkage formed by a reaction between the urethane linkage and isocyanate group or both of them in addition to the isocyanurate linkage.

Typical examples thereof are described, for example, in JP-A-55-38380, JP-A-57-78460, JP-A-57-47321, JP-A-61-111371, JP-A-64-33115, JP-A-2-250872 and JP-A-6-312969.

Polyisocyanate having an urethane linkage can be obtained, for example, by reacting 2 - 6 valent alcohol such as trimethylolpropane with a diisocyanate monomer in a molar ratio of alcoholic hydroxyl group / isocyanate group in a diisocyanate monomer of from about 1/2 to about 1/100, followed by removing unreacted diisocyanate monomer and purifying.

Preferable polyisocyanates have an isocyanurate structure. An isocyanurate structure is preferable due to its contribution to providing heat resistance and weatherability.

Polyisocyanates having an uretdione linkage are disclosed, for example, in JP-A-2-6520 and JP-A-11-140157.

Polyisocyanate having an allophanate linkage is disclosed, for example, in JP-A-7-304724 and JP-A-8-188566. Both an allophanate linkage and urethane linkage may be included. An allophanate linkage is formed by a reaction of an isocyanate group with an urethane linkage formed by a reaction between an isocyanate group and hydroxyl group. Preferable hydroxyl group containing compounds include 1 to 6 valent alcohols, and in particular, use of a mono-valent alcohol is preferable to obtain a low viscosity polyisocyanate. Combined use of mono-valent and two or higher valent alcohols is more preferable to increase the average number of the isocyanate groups.

Polyisocyanate having an iminooxadiazinedione linkage is disclosed, for example, in JP-A-11-152320 and JP-A-2000-86640.

Number average molecular weight of the polyisocyanate [B] used in the present invention is not higher than 650 preferably not higher than 600. Number average molecular weight over 750 increases the viscosity of a polyisocyanate, makes reduction of VOC in coating materials difficult and may deteriorate the appearance of coating film, even if mixed with the polyisocyanate [A].

In WO 96/17881, a polyisocyanate derived from diisocyanate and LTI is used in combination. However, this polyisocyanate has a number average molecular weight not lower than 800 by the measuring method described later, based on its backbone structure and concentration of the isocyanate group, and the solids content of polyol resin used is also different from that in the present invention.

Viscosity of the polyisocyanate [B] having a number average molecular weight not higher than 750 is not higher than 3000 mPa·s / 25°C under the condition of being substantially free from solvent and diisocyanate (isocyanate content is not higher than 0.5% by mass). Concentration of the isocyanate group depends on the backbone structure and those in the case of an HDI type are as follows.
1) Isocyanurate type polyisocyanate: not less than 22% by mass.
2) Urethane-modified isocyanurate type polyisocyanate: not less than 18% by mass.
3) Allophanate type polyisocyanate: not less than 10% by mass.
4) Uretdione type polyisocyanate: not less than 15% by mass.

Viscosity of the polyisocyanate [B] is preferably from 300 to 3000 mPa·s / 25°C, more preferably from 300 to 2000 mPa·s / 25°C and most preferably from 300 to 1500 mPa·s / 25°C.

The polyisocyanate [A] used in the present invention is a polyisocyanate having an ester linkage in the molecule. This polyisocyanate is an aliphatic polyisocyanate, and the reactivity of its isocyanate group is enhanced by the ester linkage. The molecular weight is from 200 to 500. A molecular weight lower than 200 lowers the mechanical strength of the coating film, and a molecular weight over 500 reduces the effect to provide a low viscosity.

The polyisocyanate [A] used in the present invention is represented by the following general formula (I): 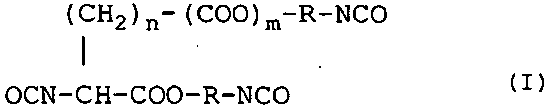 wherein, R is an alkylene group having 2 to 5 carbon atoms, n is 1 or 2 and m is 0 or 1.

The polyisocyanate [A] can be manufactured, for example, using an amino acid as a starting material. Such amino acid includes, for example, 2,5-diaminovaleric acid, 2,6-diaminohexanoic acid, aspartic acid and glutamic acid. In manufacturing the polyisocyanate, the carboxylic group of these amino acids is esterified with an alkanolamine such as ethanolamine. The amino group of these amino acids or alkanolamines may be converted to hydrochloride in advance, for example, with hydrochloric acid. Amines having an ester group thus obtained or the hydrochloride thereof are converted to polyisocyanate by phosgenation.

Preferable examples of such polyisocyanate [A] include GTI (molecular weight of 311) disclosed in JP-B-4-1033 and LTI (molecular weight of 267) disclosed in JP-A-53-135931.

The mixing ratio of the polyisocyanate [B] having a number average molecular weight of not higher than 750 and the polyisocyanate [A] having an ester group in the present invention, [B]/[A], is 9/1 to 1/9,' preferably 8/2 to 2/8 in a ratio by weight. The above described ratio over 9/1 makes the drying characteristics, lowering of viscosity and appearance of coating films on a base coat insufficient, and the ratio below 1/9 may similarly deteriorate the appearance or lower the mechanical properties of a coating film.

The above described polyisocyanate mixture .may be converted to a block type isocyanate by blocking the isocyanate group with a blocking agent.

A mixture of the above described polyisocyanate [A] and the polyisocyanate [B] mixed with polyol mentioned later provides a high solids coating composition of the present invention.

Polyols include, for example, acrylic polyol, polyester polyol, polyether polyol epoxy polyol and fluorine containing polyol.

Acrylic polyols can be obtained, for example, by copolymerizing a polymerizable monomer having one or more active hydrogens in one molecule and other monomers copolymerizable with this monomer.

The acrylic polyol can be obtained by copolymerizing a single monomer or a mixture thereof selected from the group consisting of, for example, acrylates having an active hydrogen such as 2-hydroxyethyl acrylate, 2-hydroxypropyl acrylate and 2-hydroxybutyl acrylate; methacrylates having an active hydrogen such as 2-hydroxyethyl methacrylate, 2-hydroxypropyl methacrylate, 2-hydroxybutyl methacrylate, 3-hydroxypropyl methacrylate and 4-hydroxybutyl methacrylate; (meth)acrylates having a polyvalent active hydrogen such as monoacrylate or monomethacrylate of triols such as glycerin and trimethylolpropane; monoethers of polyether polyols such as polyethylene glycol, polypropylene glycol and polybutylene glycol and the above described (meth)acrylates having an active hydrogen; addition products of glycidyl (meth)acrylate and monobasic acid such as acetic acid, propionic acid and p-tert-butylbenzoic acid; and addition products obtained by ring-opening polymerization of lactones such as ε-caprolactone and γ-valerolactone onto an active hydrogen of the above described (meth)acrylates having an active hydrogen as an essential component(s), and optionally a single monomer or a mixture of monomers selected from the group consisting of, for example, acrylates such as methyl acrylate, ethyl acrylate, isopropyl acrylate, n-butyl acrylate and 2-ethylhexyl acrylate; methacrylates such as methyl methacrylate, ethyl methacrylate, isopropyl methacrylate, n-butyl methacrylate, isobutyl methacrylate, n-hexyl methacrylate, cyclohexyl methacrylate, lauryl methacrylate and glycidyl methacrylate; unsaturated carboxylic acids such as acrylic acid, methacrylic acid, maleic acid and itaconic acid; unsaturated amides such as acrylamide, N-methylol acrylamide and diacetone acrylamide; vinyl monomers having a hydrolyzable silyl group such as vinyltrimethoxysilane, vinylmethyldimethoxysilane and γ-(meth)acrylpropyltrimethoxysilane; and other polymerizable monomers such as styrene, vinyltoluene, vinyl acetate, acrylonitrile and dibutyl fumarate, by a usual method. The acrylic polyol can be obtained, for example, by a solution polymerization of the above described monomer components, in the presence of radical polymerization initiators such as well-known peroxides or azo compounds.

Polyester polyols include, for example, those obtained by a condensation reaction of one or a mixture of dibasic acids selected from the group consisting of carboxylic acids such as succinic acid, adipic acid, sebacic acid, dimer acid, maleic anhydride, phthalic anhydride, isophthalic acid and terephthalic acid with a single or a mixture of polyhydric alcohols selected from the group consisting of, for example, ethylene glycol, propylene glycol, diethylene glycol, neopentyl glycol, trimethylolpropane and glycerin; and polycaprolactones such as those obtained by ring-opening polymerization of ε-caprolactone to a polyhydric alcohol. These polyester polyols can be modified with aromatic diisocyanate, aliphatic or alicyclic diisocyanate and polyisocyanate obtained from these compounds. In this case, aliphatic or alicyclic diisocyanates and polyisocyanates obtained from these diisocyanates are particularly preferable from the viewpoint of weatherability and non-yellowing property..

Polyether polyols include, for example, polyether polyols obtained by an addition of one or a mixture of alkylene oxides such as ethylene oxide, propylene oxide, butylene oxide, cyclohexene oxide and styrene oxide to one or a mixture of polyvalent hydroxyl compounds using a strong basic catalyst of, for example, hydroxides of metals such as lithium, sodium and potassium, alcoholates and alkylamines; and polyether polyols obtained by reacting multifunctional compounds such as ethylenediamine with alkylene oxides; along with so-called "polymer polyols" obtained by polymerizing acrylamide and the like using these polyethers.

The above described polyvalent hydroxyl compounds include;
(i) Polyvalent hydroxyl compounds such as diglycerin, ditrimethylolpropane, pentaerythritol and dipentaerythritol;
(ii) Sugar alcohol compounds such as erythritol, D-threitol, L-arabinitol, ribitol, xylitol, sorbitol, mannitol, galactitol and rhamnitol;.
(iii) Monosaccharides such as arabinose, ribose, xylose, glucose, mannose, galactose, fructose, sorbose, rhamnose, fucose and ribodesose;
(iv) Disaccharides such as trehalose, sucrose, maltose, cellobiose, gentiobiose, lactose and melibiose;
(v) Trisaccharides such as raffinose, gentianose and melezitose; and
(vi) Tetrasaccharides such as stachyose.

Fluorine containing polyols can be obtained by copolymerizing, for example, a fluorine containing monomer such as chlorotrifluoroethylene and tetrafluoroethylene and a hydroxyl group containing monomer such as hydroxyvinyl ether as essential components optionally with other monomers.

These various types of polyols may also be used in a suitable combination of two or more types.

Preferable polyols are acrylic polyol and polyester polyol, and acrylic polyol is particularly preferable. These polyols may also be used in combination with a non-aqueous dispersion (NAD) of a polyester polyol.

The concentration of the polyol resin (solids content) used in the present invention is 60 to 100% by mass. A content less than 60% by mass makes it difficult to reduce VOC. Number average molecular weight of the resin component is 500 to 5000. A number average molecular weight over 5000 increases the viscosity of the polyol and thus makes it difficult to attain a high resin content, while a number average molecular weight less than 500 may decrease the mechanical properties of cured coating films. The hydroxyl value of the polyol resin component is 30 to 300 mgKOH/g, preferably from 50 to 300 mgKOH/g, more preferably from 70 to 300 mgKOH/g. A hydroxyl value below 30 mgKOH/g results in an insufficient number of hydroxyl groups in the low molecular weight polyol portion and thus lower crosslinkability. Polyols of low molecular weight, in particular, show such tendency. A hydroxyl value over 300 mgKOH/g causes too high of a crosslinking density and may deteriorate flexibility of the coating film to be formed.

The polyol may optionally have an acid value. The glass transition temperature is -20 to 100°C, which can also be calculated by the Fox equation in the case of an acrylic polyol.

Since the polyol specified by the present invention to be used for high solids coatings has a low molecular.weight, it provides a lower drying rate compared with polyols having a high molecular weight, even if the conversion rate between hydroxyl group and isocyanate group is the same. This is because there is hardly any increase of molecular weight caused by the reaction. It is effective to use a highly reactive polyisocyanate [A] of the present invention having an isocyanate group adjacent to an ester group to improve the problem of drying characteristics. However, a coating film formed only with a low molecular weight polyol and the polyisocyanate [A] lacks flexibility. The polyol has a molecular weight distribution. Particularly, in the case of a lower molecular weight polyol for high solids coating materials, the hydroxyl value of the polyol is often designed to be a little higher in order to add hydroxyl group to a lower molecular weight portion of the polyol. However, a coating film formed only with a resin composed of a polyol having a high hydroxyl group value and the polyisocyanate [A] of the present invention may result in a crosslinking density that is too high. The lower molecular weight of the polyisocyanate [A] is also another reason for the high crosslinking density.

The present invention provides a polyisocyanate mixture, which enables the production of high solids coating materials by a synergy effect of the polyisocyanate [A] and the specified polyisocyanate [B] and which gives flexibility and drying characteristics (curability) to a coating film even if it is used in combination with a polyol having a low molecular weight and a high hydroxyl group value suitable for high solids coating materials, and a high solids coating composition comprising the mixture.

The mixing ratio of the polyisocyanate mixture and the polyol of the present invention is determined by an equivalent ratio between an isocyanate group of the above described polyisocyanate mixture and a hydroxyl group of the polyol. The above described equivalent ratio between the isocyanate group and the hydroxyl group is 5/1 to 1/5, preferably 5/3 to 3/5, and more preferably 5/4 to 4/5.

Surprisingly, it was found that the high solids coating composition of the present invention was able to provide a highly smooth coating film. In the case of simultaneous baking of a base coat and a top clear coat applied on the base coat, it is desirable that the base coat of the lower layer cures faster than the top clear coat to obtain a coating film having a high quality appearance. Accordingly, it was presumed that the appearance of the coating film after baking might be deteriorated if a highly reactive hardening agent such as a polyisocyanate having an isocyanate group adjacent to an ester linkage was used in the top clear coat.

However, contrary to such prediction, the polyisocyanate mixture of the present invention can provide a coating film having a high quality appearance by using the highly reactive polyisocyanate [A] and the specific polyisocyanate [B], along with the specified polyol.

In the curing agent and the high solids coating composition of the present invention, various solvents and additives can also be used depending on applications and purposes. Solvent can be suitably selected and used depending on applications and purposes, from a group consisting of ketones such as acetone, methyl ethyl ketone and methyl isobutyl ketone; esters such as ethyl acetate, n-butyl acetate and cellosolve acetate; alcohols such as butanol and isopropyl alcohol; and hydrocarbons such as toluene, xylene, cyclohexane, mineral spirits and naphtha. These solvents may be used alone or in combination of two or more.

Further, a hardening accelerator may be optionally added to the composition, for example, organometal compounds such as metal carboxylates including tin, zinc or lead; antioxidants such as hindered phenols; UV absorbers such as benzotriazole and benzophenone; pigments such as titanium oxide, carbon black, indigo, quinacridone and pearl mica; metal pigments such as aluminum; and rheology control agents such as hydroxyethyl cellulose and urea compounds.

The concentration of the resin component in the coating composition of the present invention based on the total mass of the polyol and the polyisocyanate mixture is not less than 60% by mass, preferably not less than 65% by mass.

The coating composition thus prepared can be used as an adhesive etc., but it can be applied, in particular, to metals such as steel plates and surface-treated steel plates; organic materials such as plastics; and inorganic materials such as cement, calcium silicate and gypsum as a coating material by means of roll coating, curtain flow coating, spray coating and electrostatic coating. It is particularly useful as a top or middle layer coating for plastics, pre-coated metals including corrosion-proof steel plates, and materials treated with cationic or anionic electrodeposition along with automotive coatings to provide a decorative appearance, weatherability, acid resistance, corrosion resistance and chipping resistance.

Particularly, the coating composition of the present invention is useful for a top clear coat to be applied on a non-water-based base coat layer, preferably on a water-based base coat layer, containing a pigment in the automotive coating, because the composition can attain a low VOC concentration, and because the coating film formed has an urethane linkage and a high hardness providing a good chemical resistance, an excellent adhesion to organic coating films and a superior appearance of the coating film. In addition, the composition has a big advantage that it can attain a superior appearance of coating film even in a so-called 2 coats / 1 bake system in which both the base coat and top clear coat are cured simultaneously in the above described automotive coating.

The present invention will be further explained hereinbelow in detail based on Examples, however, the present invention should not be restricted by the following Examples.

### (Measurement of number average molecular weight)

Number average molecular weight is measured by gel permeation chromatography (hereinafter called GPC) using the following equipment, based on the polystyrene standard:

| | | |
|---|---|---|
| Equipment: | TOSOH CORP. | HLC-802A |
| Column: | TOSOH CORP. | G1000HXL x 1 column |
| | | G2000HXL x 1 column |
| | | G3000HXL x 1 column |
| Carrier: | Tetrahydrofran | |
| Detecting method: | Differential refractometer | |

### (Viscosity measurement)

Viscosity was measured at 25°C using the Model E viscometer of TOKIMEC INC.

### (Solids content in coating material)

Specified amounts of polyol and curing agent were mixed, then the resin content was adjusted so that the coating viscosity became 50 seconds (Ford Cup #4 at 20°C). Evaluation of the solids content was made based on the following criteria:
@ Resin content over 65% by mass
○ Resin content 60 to 65% by mass
× Resin content below 60% by mass

### (Appearance of coating film)

Surface states of test coating plates were judged by visual inspection based on the following criteria:
○: Good in gloss, smoothness and sharpness
Δ: Slightly inferior in gloss, smoothness and sharpness
×: Remarkably poor in gloss, smoothness and sharpness

### (Evaluation of impact resistance)

Impact resistance was evaluated using the DuPont type impact tester at 20°C. A steel plate was coated and baked at 140°C for 30 minutes to obtain a 50 µm thick coating film. The plate was placed on a cradle, followed by setting an impactor (radius of 112.7 mm) and dropping a 500 g load from a height of 40 cm against the impactor. Condition of the coating film was inspected based on the following criteria:
○: No abnormality was found in the coated film
×: Abnormality was found in the coating film

### (Occurrence of foaming (crater-like projections or pinholes))

An acrylic-melamine type water-based coating material including aluminum pigment was coated on a steel plate to obtain a 20 µm thick coating film, followed by natural drying for 10 minutes. Subsequently, the plate was further coated with a clear coating material so that the thickness of the coating film became 50 µm, then baked at 140°C for 30 minutes (2 coats / 1 bake). The occurrence of foaming on the coating film (crater-like projections or pinholes on the coating film surface) was ranked based on the following criteria:
○: No crater-like projection or pinhole was found or only a small amount of fine projections were found on the coated film.
Δ: Many fine projections or a small amount of large projections were found.
X: Many large projections were found.

The occurrence of foaming was further measured using the surface roughness shape analyzer "Surfcom 554AD" (trade name of Tokyo Seimitsu Co., Ltd.).

### Example 1

HDI-based isocyanurate type polyisocyanate, "Duranate TPA-100" (trade name, Asahi Kasei Corp.: viscosity 1350 mPa·s/25°C, content of NCO group 23.1% by mass, number average molecular weight 640, content of monoisocyanurate 66% by mass), and LTI (viscosity 20 mPa·s/25°C, content of NCO group 47.2% by mass, molecular weight 267) were mixed in the ratio by mass of 5 : 5. Thus obtained polyisocyanate mixture had the viscosity of 120 mPa·s/25°C and the content of NCO group of 35.2% by mass.

### Example 2

"Duranate TPA-100" and LTI were mixed in the ratio by mass of 2.5 : 7.5. Thus obtained polyisocyanate mixture had the viscosity of 45 mPa·s/25°C and the content of NCO group of 41.2% by mass.

### Example 3

"Duranate TPA-100" and LTI were mixed in the ratio by mass of 7.5 : 2.5. Thus obtained polyisocyanate mixture had the viscosity of 380 mPa·s/25°C and the content of NCO group of 29.1% by mass.

### Example 4

"Duranate TPA-100" and GTI (viscosity 50 mPa·s/25°C, content of NCO group 40.3% by mass, molecular weight 311) were mixed in the ratio by mass of 5 : 5. Thus obtained polyisocyanate mixture had the viscosity of 260 mPa·s/25°C and the content of NCO group of 31.7% by mass.

### Example 5

Isocyanurate type polyisocyanate modified with HDI-based urethane, "Duranate TSA" (trade name, Asahi Kasei Corp.: viscosity 550 mPa·s/25°C, content of NCO group 20.6% by mass, number average molecular weight 530), and LTI were mixed in the ratio by mass of 7.5 : 2.5. Thus obtained polyisocyanate mixture had the viscosity of 200 mPa·s/25°C and the content of NCO group of 27.3% by mass.

### Comparative Example 1

Isocyanurate type polyisocyanate modified with HDI-based urethane, "Duranate THA" (trade name, Asahi Kasei Corp., viscosity 2300 mPa·s/25°C, content of NCO group 21.1% by mass, number average molecular weight 800, monoisocyanurate content 37% by mass), and LTI were mixed in the ratio by mass of 5 : 5. Thus obtained polyisocyanate mixture had the viscosity of 650 mPa·s/25°C and the content of NCO group of 34.2% by mass.

### Example 6

Compounding was carried out using 100 parts of acrylic polyol, "Hitaroid 3083-70B" (trade name, Hitachi Chemical Co. Ltd., content of resin component 70%, hydroxyl value per resin component 100 mgKOH/g, number average molecular weight of resin 3300, glass transition temperature 50°C), and 14.9 parts of the polyisocyanate mixture of Example 1. The solids content of the coatings after viscosity adjustment of the thus obtained coating composition, and impact resistance and surface appearance of cured film were all ranked as ○.

### Examples 7 to 10

The same compounding as in Example 6 was repeated except for using the polyisocyanate mixtures obtained in Examples 2 to 5 (equivalent ratio of isocyanate group / hydroxyl group was 1.0). Solids contents of the coatings after viscosity adjustment were ranked as ⊚ with the polyisocyanate mixture in Example 7 (the polyisocyanate in Example 2 was used) and as ○ with the polyisocyanate mixtures in Examples 8 to 10. Impact resistances and appearances of the thus obtained coating films were all ranked as ○.

### Comparative Example 2

Compounding was carried out using 100 parts of the acrylic polyol, "Hitaroid 3083-70B" (trade name, Hitachi Chemical Co. Ltd), and 15.3 parts of the polyisocyanate of Comparative Example 1. The solids content of the thus obtained coating composition after viscosity adjustment was ranked as ×, surface appearance of the coating film was ranked as Δ and impact resistance was ranked as ○.

### Comparative Example 3

The same compounding as in Comparative Example 2 was repeated except for using 22.6 parts of "Duranate TPA-100" instead of the polyisocyanate of Comparative Example 1. Solids content of the thus obtained coating composition after viscosity adjustment was ranked as ×, and the impact resistance and appearance of the coating films were ranked as ○.

### Comparative Example 4

The same compounding as in Comparative Example 2 was repeated except for using 11.1 parts of LTI instead of the polyisocyanate of Comparative Example 1. Solids content of the thus obtained coating composition after viscosity adjustment was ranked as ⊚, and the impact resistance and appearance of the coating films were ranked as ×.

### Comparative Example 5

Compounding was carried out using 100 parts of acrylic polyol, "Acrydic A-801" (Dainippon Ink & Chemicals Inc., content of resin component 50% by mass, hydroxyl value per resin component 100 mgKOH/g, number average molecular weight of resin 8200, glass transition temperature 70°C), and 10.6 parts of the polyisocyanate of Example 1. Solids content of the thus obtained coating composition after viscosity adjustment was ranked as ×.

### Comparative Example 6

The same compounding as in Comparative Example 5 was repeated except for using 10.9 parts of the polyisocyanate of Comparative Example 1 instead of the polyisocyanate of Example 1. Solids content of the thus obtained coating composition after viscosity adjustment was ranked as ×.

### Example 11

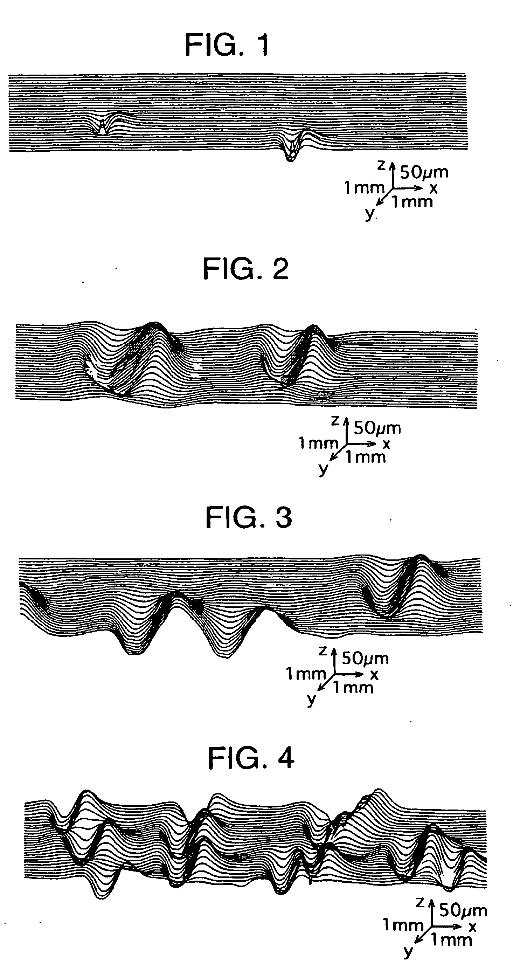

An acrylic-melamine type water-based coating material including aluminum pigment was coated on a steel plate to obtain a 20 µm thick coating film, followed by natural drying for 10 minutes. Subsequently, the coating material of Example 6 was further coated so that the film thickness became 50 µm and baked at 140°C for 30 minutes (2 coats / 1 bake). The state of foaming and appearance of the coating film were all ranked as ○. Foaming measured using the surface roughness shape analyzer "Surfcom 554AD" is shown in Fig. 1. Foaming was fine and the frequency of occurrence was low.

### Example 12

The same operation as in Example 11 was repeated except for using the coating material of Example 7. The state of foaming and appearance of the thus obtained coating film were all ranked as ○.

### Example 13

The same operation as in Example 11 was repeated except for using the coating material of Example 8. The state of foaming and appearance of the thus obtained coating film were all ranked as ○.

### Comparative Example 7

The same operation as in Example 11 was repeated except for using the coating material of Comparative Example 2 instead of the coating material of Example 6. The occurrence of foaming and appearance of the thus obtained coating film were all ranked as ×. The state of the foaming measured using the surface roughness shape analyzer "Surfcom 554AD" is shown in Fig. 2. Foaming was very large and the frequency of occurrence was also high.

### Comparative Example 8

The same operation as in Example 11 was repeated except for using the coating material of Comparative Example 3 instead of the coating material of Example 6. The state of foaming and appearance of the thus obtained coating film were all ranked as ×. The occurrence of foaming measured using the surface roughness shape analyzer "Surfcom 554AD" is shown in Fig. 3. Foaming was very large and the frequency of occurrence was high.

### Comparative Example 9

The same operation as in Example 11 was repeated except for using the coating material of Comparative Example 4 instead of the coating material of Example 6. The state of foaming and appearance of the thus obtained coating film were all ranked as ×. The occurrence of the foaming measured using the surface roughness shape analyzer "Surfcom 554AD" is shown in Fig. 4. Foaming was very large and the frequency of occurrence was also high.

### Example 14

A mixture of 70 parts of 70% ethyl acetate solution of acrylic polyol, "ARUFON UH-2090" (Toagosei Co. Ltd., hydroxyl group value per resin component 130 mgKOH/g, number average molecular weight of resin 1600, glass transition temperature 14°C), and 30 parts of 70% butyl acetate solution of "Desmophen 670" (Sumitomo Bayer Urethane Co. Ltd., hydroxyl group value per resin component 142 mgKOH/g, number average molecular weight of resin 1200) was made as a main component. The main component was compounded with 15.8 parts of a curing agent which is a mixture consisting of allophanate type polyisocyanate (viscosity 550 mPa·s/25°C, content of NCO group 20.3% by mass, number average molecular weight 700, average number of functional groups 3.4) prepared from a mixture of isobutanol / 1,4-butanediol in the ratio of 45/55 (mole / mole) and HDI,and LTI in the ratio by mass of 6 : 4.

The solids content of the thus obtained coating composition after viscosity adjustment was ranked as ⊚, whereas the impact resistance and surface appearance of the cured film were ranked as ○.

Results of Examples 6 to 14 and Comparative Examples 2 to 9 are shown in Table 1.

### INDUSTRIAL APPLICABILITY

A high solids coating composition containing a polyisocyanate mixture of the present invention has a high content of resin component and reduces VOC. Coating films obtained from this composition are superior in appearance and impact resistance. In particular, the coating composition of the present invention is advantageous in attaining a superior appearance of coating film in the so-called 2 coats / 1 bake system, that is, a simultaneous curing system of a base coat and a top clear coat, in connection with automotive coatings.

**Table 1**

| | Example 6 | Example 7 | Example 8 | Example 9 | Example 10 | Example 14 | Comparative Example 2 | Comparative Examples 3 | Comparative Example 4 | Comparative Example 5 | Comparative Example 6 |
|---|---|---|---|---|---|---|---|---|---|---|---|
| Polyol | Hitaroid 3083 | Hitaroid 3083 | Hitaroid 3083 | Hitaroid 3083 | Hitaroid 3083 | ARUFON+ Desmphen | Hitaroid 3083 | Hitaroid 3083 | Hitaroid 3083 | A-801 | A-801 |
| Hardening Agent | Example 1 | Example 2 | Example 3 | Example 4 | Example 5 | | Comparati ve Example 1 | | | Example 1 | Comparative Examples 1 |
| LTI | 5 | 7.5 | 2.5 | | 2.5 | 4 | 5 | | 10 | 5 | 5 |
| GTI | | | | 5 | | | | | | | |
| TPA | 5 | 2.5 | 7.5 | 5 | | | | 10 | | 5 | |
| TSA | | | | | 7.5 | | | | | | |
| THA | | | | | | | 5 | | | | 5 |
| HDI allophanate | | | | | | 6 | | | | | |
| Solids Content in Coating Mtl | ○ | ⊚ | ○ | ○ | ○ | ⊚ | × | × | ⊚ | × | × |
| Appearance of Coating Film | ○ | ○ | ○ | ○ | ○ | ○ | Δ | ○ | × | - | - |
| Impact Resistance | ○ | ○ | ○ | ○ | ○ | ○ | ○ | ○ | × | - | - |
| | | | | | | | | | | | |

| | Example 11 | Example 12 | Example 13 | | | | Comparative Example 7 | Comparative Example 8 | Comparative Example 9 | | |
|---|---|---|---|---|---|---|---|---|---|---|---|
| 2C/1B Foaming | ○ | ○ | ○ | | | | × | × | × | | |
| 2C/1B Appearance | ○ | ○ | ○ | | | | × | × | × | | |

## Claims

1. A polyisocyanate mixture comprising:
(i) polyisocyanate [A] represented by the following general formula (I): 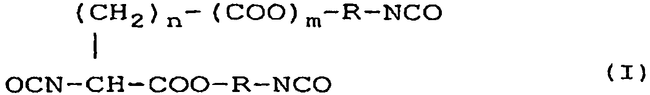 wherein, R is an alkylene group having 2 to 5 carbon atoms, n is 1 or 2 and m is 0 or 1; and
(ii) polyisocyanate [B] derived from hexamethylene diisocyanate and having at least one of the following concentrations of isocyanate group:
where the polyisocyanate is an isocyanurate type: not less than by 22% mass;
where the polyisocyanate is a urethane-modified isocyanurate type: not less than 18% by mass;
where the polyisocyanate is an allophanate type: not less than 10% by mass; and
where the polyisocyanate is an uretdione type: not less than 15% by mass,
wherein the polyisocyanate [B] is substantially free from monomeric diisocyanate and has a number of average molecular weight not higher than 650.

2. A polyisocyanate mixture according to claim 1, wherein the number average molecular weight of polyisocyanate [B] is not higher than 600.

3. A curing agent for high solids coating materials, consisting essentially of a polyisocyanate mixture according to any one of claims 1 to 2.

4. A high solids coating composition comprising a polyol satisfying all of the following conditions:
(1) Number average molecular weight of the resin: 500 to 5000
(2) Solids content of the resin: 60 to 100% by Weight
(3) Hydroxyl value of the resin: 30 to 300 mgKOH/g
(4) Glass transition temperature of the resin: -20 to 100°C
and a polyisocyanate mixture according to any one of claims 1 to 2.

5. A coating composition according to claim 4 for use as a top coat to be applied on a base coat layer containing a pigment.

6. A coating composition according to claim 5, wherein the base coat layer is a coating film obtained from a water-based coating material.

7. A coating composition according to claim 5 or 6, wherein the base coat layer and the top coat layer are simultaneously cured.

## Patentansprüche

1. Polyisocyanatgemisch, enthaltend:
(i) Polyisocyanat [A] der folgenden allgemeinen Formel (I): 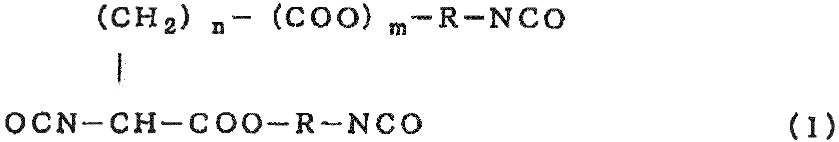 worin R eine Alkylengrupe mit 2 bis 5 Kohlenstoffatomen ist, n 1 oder 2 ist und m 0 oder 1 ist; und
(ii) Polyisocyanat [B], welches von Hexamethylendiamin abgeleitet ist und mindestens eine der folgenden Isocyanatgruppenkonzentrationen aufweist:
wenn das Polyisocyanat ein Isocyanurattyp ist: nicht weniger als 22 Massen-%,
wenn das Polyisocyanat ein Urethan-modifizierter Isocyanurattyp ist: nicht weniger als 18 Massen-%,
wenn das Polyisocyanat ein Allophanattyp ist: nicht weniger als 10 Massen-%, und
wenn das Polyisocyanat ein Uretdiontyp ist: nicht weniger als 15 Massen-%,
wobei das Polyisocyanat [B] im Wesentlichen frei von monomerem Diisocyanat ist und ein Zahlenmittel des Molekulargewichts von nicht höher als 650 aufweist.

2. Polyisocyanatgemisch nach Anspruch 1, wobei das Zahlenmittel des Molekulargewichts des Polyisocyanats [B] nicht höher als 600 ist.

3. Härter für Beschichtungsmaterialien mit hohem Feststoffgehalt, der im Wesentlichen aus einem Polyisocyanatgemisch nach einem der Ansprüche 1 bis 2 besteht.

4. Beschichtungszusammensetzung mit hohem Feststoffgehalt, welche ein Polyol enthält, das alle der folgenden Bedingungen erfüllt:
(1) Zahlenmittel des Molekulargewichts des Harzes: 500 bis 5000
(2) Feststoffgehalt des Harzes: 60 bis 100 Gew.-%
(3) Hydroxylzahl des Harzes: 30 bis 300 mg KOH/g
(4) Glasübergangstemperatur des Harzes: -20 bis 100 °C,
sowie ein Polyisocyanatgemisch nach einem der Ansprüche 1 bis 2.

5. Beschichtungszusammensetzung nach Anspruch 4 zur Verwendung als Deckschicht zum Aufbringen auf eine Basisschicht, die ein Pigment enthält.

6. Beschichtungszusammensetzung nach Anspruch 5, wobei die Basisschicht ein Beschichtungsfilm ist, der aus einem auf Wasser basierenden Beschichtungsmaterial erhalten wird.

7. Beschichtungszusammensetzung nach Anspruch 5 oder 6, wobei die Basisschicht und die Deckschicht gleichzeitig gehärtet werden.

## Revendications

1. Mélange de polyisocyanates comprenant :
(i) un polyisocyanate [A] représenté par la formule générale (I) suivante : 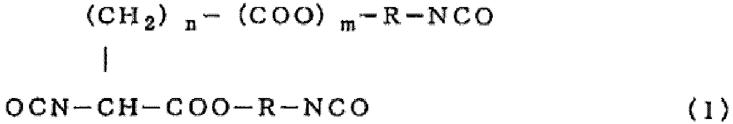 dans laquelle, R est un groupe alkylène ayant de 2 à 5 atomes de carbone, n est égal à 1 ou 2 et m est égal à 0 ou 1 ; et
(ii) un polyisocyanate [B] dérivé de diisocyanate d'hexaméthylène et présentant au moins une des concentrations suivantes en groupe isocyanate :
lorsque le polyisocyanate est un type isocyanurate : pas moins de 22 % en masse ;
lorsque le polyisocyanate est un type isocyanurate uréthane-modifié : pas moins de 18 % en masse ;
lorsque le polyisocyanate est un type allophanate : pas moins de 10 % en masse ; et
lorsque le polyisocyanate est un type uretdione : pas moins de 15 % en masse,
dans lequel le polyisocyanate [B] est pratiquement exempt de diisocyanate monomère et présente une masse moléculaire moyenne en nombre d'au plus 650.

2. Mélange de polyisocyanates selon la revendication 1, dans lequel la masse moléculaire moyenne en nombre de polyisocyanate [B] est d'au plus 600.

3. Agent durcissant pour des matériaux de revêtement à teneur élevée en matières solides, consistant essentiellement en un mélange de polyisocyanates selon l'une quelconque des revendications 1 à 2.

4. Composition de revêtement à teneur élevée en matières solides comprenant
un polyol satisfaisant toutes les conditions suivantes :
(1) masse moléculaire moyenne en nombre de la résine : 500 à 5000
(2) teneur de la résine en matières solides : de 60 à 100 % en masse
(3) indice hydroxyle de la résine : de 30 à 300 mg de KOH/g
(4) température de transition vitreuse de la résine : -20 à 100 °C
et un mélange de polyisocyanates selon l'une quelconque des revendications 1 à 2.

5. Composition de revêtement selon la revendication 4 pour une utilisation comme un revêtement supérieur à appliquer sur une couche de revêtement de base contenant un pigment.

6. Composition de revêtement selon la revendication 5, dans laquelle la couche de revêtement de base est un film de revêtement obtenu à partir d'un matériau de revêtement à base d'eau.

7. Composition de revêtement selon la revendication 5 ou 6,
dans laquelle la couche de revêtement de base et la couche de revêtement supérieur sont simultanément durcies.
